# EUROPÄISCHE PATENTSCHRIFT

(11) **EP 3 128 847 B1**
(45) Veröffentlichungstag und Bekanntmachung des Hinweises auf die Patenterteilung: **04.10.2017**
(21) Anmeldenummer: 16711616.9
(22) Anmeldetag: 22.03.2016
(51) Int. Cl.: A22C 25/18, A23L 17/10, A23P 30/10, A23B 4/06

(54) **VERFAHREN ZUR HERSTELLUNG VON THUNFISCHSTÜCKEN**
METHOD FOR PRODUCING TUNA FISH PIECES
PROCÉDÉ POUR PRÉPARER DES MORCEAUX DE THON

(30) Priorität: 23.03.2015 DE 102015104347
(43) Veröffentlichungstag der Anmeldung: 15.02.2017
(73) Patentinhaber: Nienstedt GmbH, 45721 Haltern am See (DE)
(72) Erfinder: GRONEBERG-NIENSTEDT, Petra, 40237 Düsseldorf (DE); PINZ, Uwe, 32609 Hüllhorst (DE)
(74) Vertreter: Bungartz Christophersen Partnerschaft mbB Patentanwälte
(86) Internationale Anmeldenummer: PCT/EP2016/056253
(87) Internationale Veröffentlichungsnummer: WO 2016/150956

(56) Entgegenhaltungen:
- DE-A1-102004 055 345
- DE-C1- 19 612 029
- GB-A- 2 280 869
- GB-A- 2 351 939
- US-A- 4 557 019
- US-A1- 2007 293 132

## Beschreibung

Die Erfindung betrifft ein Verfahren zum Herstellen von Thunfischstücken mit möglichst hoher Qualität, wobei in das Verfahren als Inputware Thunfischstücke eingebracht werden und die zu verarbeitende Inputware optisch erfasst, auf ein Zielgewicht gebracht und anschließend in eine zur Verpackung und/oder Weiterarbeitung geeignete Form geformt wird.

Ein Verfahren zum Formen von tiefgefrorenem Fisch ist aus der EP 2 211 635 A1 bekannt. Bei diesem Verfahren werden Stücke von Fleisch oder Fisch tiefgefroren in eine Formmulde eingegeben und anschließend über zwei Teilpressschritte in eine gewünschte Form gepresst, wobei die Teilpressschritte derart ausgestaltet sind, dass die Faserstruktur des Fleisches möglichst erhalten bleibt.

Die EP 1 811 850 A1 beschreibt ein Verfahren, bei dem Fleischstücke, auch in Form von Fleisch oder Fisch, vor dem Formen in der Presse auf ein gewünschtes Gewicht gebracht werden. Bei beiden Verfahren wird das Fleisch bzw. der Fisch tiefgekühlt in die Presse eingelegt und von einem Pressstempel in eine Formmulde gedrückt oder von einem konturierten Pressstempel gegen eine ebene oder konturierte Widerlagerfläche gedrückt.

Mit dem bekannten Verfahren ist es möglich, Fleischstücke bzw. Fischstücke zum einen umzuformen und zum anderen in einer Form derart zusammenzupressen, dass sie insbesondere durch austretendes Protein aneinander haften, so dass aus einzelnen Fleischstücken ein Gesamtstück erzeugt werden kann, dass dem Aussehen eines aus muskelfleischgeschnittenen Fleischstückes bzw. Fischstückes entspricht.

Aus der EP 1 988 781 A1 ist ein weiteres Verfahren bekannt, bei dem Fleischstücke oder Fischstücke einem Formschritt, in der Fachwelt auch "Shaping" genannt, unterzogen wird. Hierzu wird zunächst in einem ersten Sortierschritt das Fleisch sortiert und vorbereitet. Frische oder gefrorene Fleischstücke, die unter einem Sollgewicht liegen, werden gesammelt und zu Clustern zusammengefasst, die dann dem Sollgewicht entsprechen. Fleischstücke die dem Sollgewicht entsprechen, werden dem Verfahren ohne weiteres zugeführt. Fleischstücke, die das Sollgewicht überschreiten, werden beschnitten, der Abschnitt wird wiederum der ersten Gruppe zugeführt und das nun auf Sollgewicht gebrachte Fleischstück wird weiter dem Formschritt zugeführt. Fleischstücke, die während der Sortierung nicht tiefgefroren sind, werden im Anschluss an die Sortierung tiefgefroren. Anschließend werden die Fleischstücke, wie oben bereits beschrieben, in einer Formpresse auf die gewünschte Kontur gepresst.

Nach dem Formen des Fleischstückes oder der Cluster der Fleischstücke wird dann entweder das Produkt eingedost oder es wird als Convenience-Produkt weiterverarbeitet. Im Rahmen der Verpackung in Dosen wird dabei Fisch, insbesondere Thunfisch, üblicherweise zunächst gegart, anschließend gekühlt oder tiefgefroren in die Dose eingefüllt. Anschließend kann eine Marinade hinzugefügt werden, die Dose wird dann verschlossen und sterilisiert. Ein Convenience-Produkt wiederum kann beispielsweise nach der Formgebung paniert, anschließend gekühlt oder tiefgefroren verpackt werden. Letztlich hängt dies von der gewünschten Lagerdauer und weiteren Anforderungen des Anwenders ab.

Der Nachteil des bekannten Verfahrens besteht darin, dass es sich zwar grundsätzlich zur Verarbeitung von Thunfischstücken eignet, aufgrund der Besonderheit des Thunfisches aber die gewichtsoptimierte Portionierung schwierig ist. Dies liegt daran, dass Thunfisch im Gegensatz zu vielen anderen Fisch- und Fleischsorten nicht so einfach geschnitten und verarbeitet werden kann. Der vergleichsweise teure Thunfisch ist nämlich nicht leicht umzuformen und zusammenzupressen wie beispielsweise andere Fischarten oder tierisches Fleisch. Hier besteht das Risiko, dass die empfindlichen Fasern des Thunfisches zerstört werden, so dass der Eindruck eines Filetstückes verloren geht und das Stück beim späteren Garen zerfällt.

Aufgabe der Erfindung ist es daher, ein Verfahren zum Formen von tiefgefrorenen Thunfischteilen zu schaffen, bei dem Outputware in möglichst hoher Qualität erzeugt wird.

Diese Aufgabe wird nach der Erfindung durch ein Verfahren gelöst, dass die Verfahrensschritte:
- Verwenden von tiefgefrorenen Inputwaren für die Durchführung des Verfahrens,
- Erfassen der Lage, Form und Größe der einzelnen Inputware über ein optisches Erfassungsmittel unter direkter oder indirekter Berücksichtigung der Faserlage des Thunfischfleischs,
- Errechnen zumindest einer Schnittlinie durch die Inputware zum Abschneiden eines Thunfischzuschnitts, der ein gewünschtes Zielgewicht und/oder eine gewünschte Form aufweist, wobei die Errechnung der Schnittlinie einen Optimierungsprozess beinhaltet, über den neben dem Bestimmen des nach dem Beschneiden zum Erreichen des Zielgewichtes notwendigen Volumens die Schnittlinie möglichst rechtwinklig zu den Fasern des Thunfisches festgelegt wird und
- Schneiden längs der errechneten Schnittlinie in einem Zuschneideschritt
aufweist. Die Inputware wird in der Regel nicht symmetrisch sein und muss daher vor der Festlegung des Schnittmusters in Form, Lage und/oder Größe erfasst werden. Hierzu ist natürlich ferner wichtig, dass diese Größen danach bis zum Einbringen der Schnitte nicht mehr verändert werden oder reproduzierbar wiederherstellbar sind. Daher wird bevorzugt bei Erfassung der Form, Lage und/oder Größe die Inputware dann zumindest auf einem Warenträger oder schon auf einer Schneidvorrichtung fixiert, so dass der Bezug von erfasster Form, Lage und/oder Größe zum Schnittbild nicht mehr verändert wird. Bei regelmäßig geformter Inputware oder Ware mit einer definierten Auflage und Form kann dagegen auf die Bestimmung von Form, Lage und/oder Größe ggfs. verzichtet werden.

Im Zusammenhang mit der Beschreibung des erfindungsgemäßen Verfahrens wird dabei das als Eingangsprodukt verwendete Thunfischstück als Inputware bezeichnet. Dies sind Stücke, die aus dem ganzen Fisch herausgeschnitten werden, in der Regel Rückenfilets (sogenannte "Loins") des Fisches. Die Anwendung der Erfindung soll jedoch nicht auf Rückenfilets beschränkt sein, obwohl diese die bevorzugten Eingangsprodukte sein werden. Die Inputware kann auch aus mehreren Stücken z.B. auch mehreren Rückenfilets bestehen, die zu einem Cluster/Block zusammengefroren wurden. Daher wird vorliegend allgemein von "Thunfischzuschnitten", gesprochen. Das Endprodukt des Verfahrens ist die Outputware.

Als Ziel des Verfahrens soll aus der Inputware oder auch aus mehreren Inputwaren eine Outputware mit möglichst hoher Qualitätsanmutung unter gleichzeitiger Optimierung der Ausbeute hergestellt werden. Thunfisch wird dem Verbraucher heute häufig als gegarte Konservenware, als aus einem Stück geschnittenes, ungegartes Steak oder als Sashimi- oder Sushi-Stück angeboten. Dabei weist das Fleisch eine prägnante Faserstruktur auf, die bei der Verarbeitung, insbesondere bei der Konservenbefüllung, häufig verloren geht.

Die Filetteile des Thunfischs werden als Rückenfilets in verschiedenen Qualitätsstufen gehandelt. Ziel des vorliegenden Verfahrens ist es, möglichst gleichgewichtige, gleichgeformte Stücke des Thunfischs zu erzeugen, die die optische Erscheinung eines aus einer Premiumqualität geschnittenen Thunfischsteaks aufweisen. Ferner soll das wertvolle, inzwischen bei manchen Arten auch seltene Fleisch möglichst vollständig bei möglichst hoher Handelsqualität verarbeitet werden. Hierzu wird bevorzugt als Inputware tiefgefrorene Rückenfilets der Premiumqualität verwendet. Diese entstehen entweder durch Filetieren des gefrorenen Fisches oder werden nach dem Filetieren des frischen Fischs tiefgefroren. Diese tiefgefrorenen Thunfischzuschnitte sollen dann möglichst ohne ein Auftauen zur Outputware verarbeitet werden, da ein Auftauen und Wiedereinfrieren die Qualität des Fleisches negativ beeinflusst. Beispielsweise leidet hierunter das Qualitätsmerkmal "Fleischfarbe".

Durch die erfindungsgemäße Ausgestaltung des Verfahrens zum Herstellen geformter Thunfischprodukte werden mehrere Verbesserungen erreicht.

Bei der Verarbeitung von beispielsweise Rückenfilets zu hochwertigen Steaks wurde bisher die nicht gefrorene oder auch die gefrorene Ware "nach Augenmaß" portioniert, was zu einer unbefriedigenden Ausbeute an hochwertiger Outputware führt. Nun kann die Ware im gefrorenen Zustand auf das gewünschte Gewicht und insbesondere in eine gewünschte Form gebracht werden. Dadurch wird die Ausbeute hinsichtlich hochwertiger Outputware deutlich gesteigert. Um aus der gefrorenen Inputware möglichst viele Steaks einer einheitlichen Größe mit gleichem Gewicht herstellen zu können, wird erfindungsgemäß das gefrorene Rückenfilet der optischen Vermessung unterzogen. Dies ist im Gegensatz zu den bisherigen Verfahren notwendig, da die gefrorene Inputware keine ebene Unterseite aufweist, sondern individuell betrachtet werden muss. Ein Rückenfilet hat dabei die Besonderheit, dass sein Durchmesser von vorne nach hinten abnimmt, die Dicke der zu schneidenden Stücke von vorne nach hinten also immer zunehmen muss, um ein gleiches Gewicht zu erhalten.

Die Bestimmung der zu schneidenden individuellen Stücke erfolgt über die Berechnung und Festlegung einer optimalen Schnittlinie bzw. meist mehrerer Schnittlinien. Das aus dem Rückenfilet zu schneidende Stück soll dabei natürlich das Aussehen und die Struktur eines Steaks erhalten. Hierzu wird das Rückenfilet in Querrichtung geschnitten, so dass das typische Schnittbild des Thunfischs mit Blick auf die Fasergrenzen erhalten bleibt. So kann ein großer Bereich des Rückenfilets in Premiumqualität als wertvolles Steakfleisch erhalten bleiben.

Durch die optische Vermessung wird es möglich, die nicht flach auf einer Schneidunterlage aufliegende, gefrorene Ware exakt zuzuschneiden. Hierzu werden die Schnittlinien bzw. -ebenen (das Schnittmuster) errechnet und der fixierten Inputware überlagert, so dass nachfolgend entlang dieser Linien bzw. Ebenen geschnitten werden kann. Als Ergebnis entstehen dann unterschiedlich dicke Stücke des Fleisches in bester Qualität.

Die optische Vermessung der tiefgefrorenen Thunfisch-Ware kann bei einer bevorzugten Ausgestaltung des Verfahrens über optische Sensoren, insbesondere Kameras und/oder auch Lasertriangolation in Verbindung mit einer entsprechenden Erfassung und Auswertung erfolgen. Dabei kann insbesondere bei der Verarbeitung der aus der Fischlende geschnittenen Rückenfilets eine vorherige Ausrichtung der tiefgekühlten Stücke erfolgen, so dass diese grundsätzlich gleich ausgerichtet sind und nur die individuellen Maßabweichungen des einzelnen Stücks erfasst und berechnet werden müssen.

Wegen der von vorne nach hinten abnehmenden Querschnittsfläche kann nun die bei gleichem Gewicht eintretende Formabweichung durch einen nachfolgenden Formprozess korrigiert werden. Dieser Formprozess ist bevorzugt ein Pressvorgang im Rahmen des so genannten Shapens. Ein solches Formverfahren ist zum Beispiel aus der EP 2 211 635 A1 bekannt. Als Ergebnis des Formprozesses liegt weiterhin Outputware mit dem Erscheinungsbild eines aus dem Filet herausgeschnittenen Steaks vor, die nun aber trotz der unterschiedlichen Ausgangsstruktur eine einheitliche Größe und Form aufweisen. Natürlich können hier nicht nur flache Steaks, sondern auch viele andere, auch dreidimensional konturierte Formen erzeugt werden.

Die Anwendung der Erfindung ist auch nicht auf das Herstellen von Steaks oder die Verarbeitung der ganzen Filetstücke beschränkt. Neu ist die Anpassung des Schneidprozesses an das vom Benutzer gewünschte Endprodukt durch die Auswahl des geeigneten Rohmaterials und den optimierten Schneidprozess nach der optischen Vermessung der als Eingangsstücke verwendeten Inputware. Diese Optimierung erfolgt gewichtsorientiert derart, dass möglichst werthaltige Stücke erzeugt werden können, wobei werthaltig bedeutet, dass möglichst zusammenhängende, einem natürlichen Steak ähnliche Stücke den größten wirtschaftlichen Wert aufweisen, während kleine Abschnitte als wirtschaftlich geringer wertig eingestuft werden, die bei Unterschreiten einer gewissen Mindestgröße einer anderweitigen Verarbeitung zugeführt werden.

Als Eingangsprodukt für das erfindungsgemäße Verfahren können (wie oben bereits beschrieben) tiefgefrorene Rückenfilets (Filetstücke) oder auch tiefgefrorene Blöcke von zusammengefassten Stücken Verwendung finden. Es kann sich dabei um gegarte oder nicht gegarte Ware handeln. Sofern Blockware verarbeitet wird, muss diese nicht notwendigerweise aus ganzen Filetstücken des Rückenfilets bestehen, auch mehrere Zuschnitte von Stücken des Filets oder sonstigen Stücken können hier verarbeitet werden.

Nach dem Einbringen der Portionsschnitte wird die nicht zielkonforme, d.h. zu leichte oder nicht geeignet geformte Inputware aus dem Verfahren ausgeschleust, sofern sie nicht zusammen mit anderen Thunfischstücken zu einem steakähnlichen Stück verarbeitet werden können bzw. sollen. Diese ausgeschleusten Teile können dann beispielsweise zu nicht gegarten Blöcken zusammengefasst und in einer Anwendung, die geringere Ansprüche an die Qualität erlaubt, weiterverarbeitet werden, wobei unter Qualität nicht die Frische, sondern die zusammenhängende Faserstruktur des Fleisches verstanden wird.

Das Einbringen der Portionsschnitte erfolgt automatisiert anhand von errechneten Schnittlinien bzw. -ebenen, eines Schnittmusters, unter Berücksichtigung des Ergebnisses der optischen Vermessung der individuellen Fleischstücke. Hier wird neben der Grundform der Fleischstücke auch die Lage der Faserstrukturen erfasst und bei der Berechnung der Schnittlinien berücksichtigt, so dass die Schnittlinien bevorzugt rechtwinklig oder in einem Winkel zwischen 45° und 90° zum Faserverlauf eingebracht werden. Bei einigen Anwendungen insbesondere bei Blöcken kann eine Schnittführung weitgehend parallel zum Faserverlauf durchgeführt werden. Eine Schnittlinie kann dabei gerade oder gebogen sein.

Die ausgeschleuste Ware kann zum Beispiel als einfache Dosenware verpackt und zum günstigen Preis angeboten werden, wobei hier die einzelnen Stücke eher klein sind und zum Beispiel als Zutat für Salat oder auch eine Thunfisch-Pizza dienen können.

Die nicht ausgeschleusten, auf das gewünschte Zielgewicht zugeschnittenen Stücke können bereits durch den Portionsschnitt die gewünschte Form aufweisen. Dies wird aber nur bei den wenigsten Produkten der Fall sein. Die überwiegenden Stücke werden über den Formprozess dann auf eine gleiche Form gebracht. Ferner kann es natürlich möglich sein, dass eine einheitliche Form gar nicht gewünscht ist, so dass in diesen Fällen auf den formenden Pressschritt sogar verzichtet werden kann oder dass unterschiedliche Formen erzeugt werden.

Die so erzeugte Ware kann in allen Fällen anschließend mariniert oder ohne Zugabe von Marinade verpackt und gelagert bzw. ausgeliefert werden.

Sollen anstelle der einzelnen Filetstücke Blöcke von tiefgekühlter, vor dem Tieffrieren gegarter Ware verarbeitet werden, können diese zunächst durch geeignetes Zusammenlegen der einzelnen Fleischstücke vor oder nach dem Garprozess zu den Blöcken und anschließendes Tieffrieren erzeugt werden. Hierbei kann schon beim Tieffrieren eine Vorformung erfolgen, indem die Filetstücke zum Beispiel in eine Gefrierform aneinander anliegend eingelegt werden, so dass Blöcke unterschiedlicher Dimension und Form erzeugt werden können. Diese Blöcke müssen dabei keine regelmäßige oder symmetrische Form aufweisen, so können beispielsweise auch kleinere Filetstücke zu der Form eines einzelnen, größeren Filets zusammengelegt werden.

Beim Einlegen wird bevorzugt die Faserausrichtung des Fleisches berücksichtigt, so dass die einzelnen Stücke mit zueinander paralleler Faserorientierung angeordnet werden. Um den von vorne nach hinten geringer werdenden Querschnitt zu berücksichtigen, können dabei Fischstücke abwechselnd um 180° zueinander verdreht nebeneinander angeordnet werden.

Ist der Block, wie oben beschrieben, homogen, mit zueinander parallelen Faserrichtungen erzeugt worden und hat er wohl definierte Außenkonturen kann gegebenenfalls auf eine optische Vermessung der einzelnen Blöcke verzichtet werden. Andernfalls erfolgt auch hier eine Vermessung, um die Ausbeute an hochwertiger Outputware zu optimieren, wobei hier zum Beispiel das Erscheinungsbild der Seitenflächen zur Bestimmung des Faserverlaufs herangezogen werden kann. Die Abmessungen der Blöcke mit definierter Außenkontur sind nicht wie in der Weißfischindustrie standardisiert, sondern können auf das Endprodukt und das damit verbundene optimale Schnittmuster ausgerichtet werden.

Nach dem Schneiden dieser gegarten, tiefgefrorenen Blöcke in die einzelnen Portionen kann nochmals das Gewicht kontrolliert werden, wobei nachfolgend die dann erzeugten, üblicherweise scheibenförmigen Fleischstücke mit beispielsweise rechteckigem oder rundem Querschnitt dem Formprozess in der Pressvorrichtung unterzogen werden. Durch dieses Formen erhält dann das Produkt ein Erscheinungsbild, das sich an den Fasern von natürlichen Filetstücken orientiert. Die Umformgrade können dabei oft gering gehalten bleiben, da es in vielen Fällen nur notwendig ist, eine Kontur zu erzeugen, die an ihren Umfangsflächen der Umfangsfläche eines natürlichen Filetstückes entspricht. Gleichzeitig kann die Ober- und die Unterseite des Stückes noch die Kontur eines handgeschnittenen Stückes mit eher unebener Oberfläche erhalten.

Die so erzeugten Stücke werden dann weiterverarbeitet, beispielsweise verpackt oder auch in eine Dose eingefüllt, auch hier kann dann nach der Abfüllung einer Marinade zugefügt werden, wobei die Dose anschließend verschlossen und in geschlossenem Zustand sterilisiert werden kann.

Alternativ zur Erzeugung von steakähnlichen Stücken, die zunächst aus den Filetstücken (Rückenfilets) geschnitten und in Form gepresst werden, kann auch das tiefgefrorene Filetstück zumindest aus dem vorderen Bereich des Filetstückes über das Presswerk umgeformt werden, so dass sich dann durch Zerschneiden des so erzeugten Formkörpers steakähnliche Stücke herstellen lassen. Auch hier erfolgt eine optische Erfassung um die Faserlage bzw. den Faserverlauf und die optimale Länge des Filetstückes zu ermitteln, welches der Verformung unterzogen wird, um die jeweils notwendige Schnittführung zu bestimmen, so dass ein qualitäts- und gewichtsoptimiertes Stück hergestellt wird.

Analog zum oben beschriebenen Verfahren kann auch mit ungegarter Ware verfahren werden. In diesem Fall werden die Blöcke aus ungegartem, also rohem Thunfisch durch Zusammenstellen der einzelnen Stücke, ebenfalls bevorzugt mit faserparalleler Orientierung zusammengestellt und tiefgefroren. Wie bereits erwähnt können auch hier die Blöcke unterschiedliche Außenkonturen haben, mit den daraus resultierenden Anforderungen an die optische Vermessung. Auch hier werden Portionsschnitte eingebracht, um das Produkt auf das gewünschte Gewicht zuzuschneiden. Anschließend wird diese Scheibe rohen Thunfischs dann in der Pressvorrichtung umgeformt und auf die bereits beschriebene Weise durch Eindosen oder im Rahmen einer Convenience-Verarbeitung weiterverarbeitet.

Insbesondere dann, wenn nach dem Pressvorgang die in das Verfahren eingebrachte Rohware gegart werden soll, ist es besonders vorteilhaft, dass die Stücke eine einheitliche Form aufweisen. Die einheitliche Form und Dicke ermöglicht es, das Stück homogen zu garen, während beim Garen ganzer Filetstücke aufgrund der unterschiedlichen Dicken bisher Schwierigkeiten auftraten. Das Garen erfolgt üblicherweise auf Bändern, die durch einen Kombinationsofen, der Heißluft mit Wasserdampf kombiniert, hindurch laufen.

Würden nun, wie bei der herkömmlichen Verfahrensweise in einem Garprozess ganze Filetstücke gegart, wird bei entsprechender Einstellung der Verweildauer und Hitze der vordere, dickere Bereich des Filetstückes durchgegart. Dies bedingt aber zwangsläufig, dass der hintere, dünnere Bereich übergart wird. Wird der Garprozess dagegen verkürzt oder die Hitzeeinwirkung reduziert, ist das Produkt im vorderen Bereich wiederum nicht durchgegart. Durch das Erzeugen von homogenen Stücken, unabhängig davon, ob die Ware vor oder nach dem Zerschneiden in Form gepresst wird, kann nun ein wesentlich harmonischeres Garen realisiert werden, was die Fertigung qualitätsoptimiert gegarter Stücke wesentlich erleichtert.

Eine vorteilhafte Variation des Verfahrens - die bereits schon mit dargestellt wurde und an dieser Stelle noch einmal zusammengefasst wird, ist die Zusammenstellung von nicht gefrorenen gegarten oder rohen Thunfischteilen zu einem Block. Dieses ist gekennzeichnet, durch die Verfahrensschritte:
- Herstellen des Blocks durch Zusammenfassen nicht gefrorener Thunfischteile zu wenigstens einem Cluster von Thunfischteilen,
- Formen des nicht gefrorenen Blocks auf eine anwendungsorientierte Endform aus dem Cluster von Thunfischteilen im nicht gefrorenen Zustand und Tieffrieren des so geformten Blocks oder

- Tieffrieren des Blocks und anschließendes Formen des Blocks auf die gewünschte, anwendungsorientierte Endform durch Schneiden und/oder Umformen in einer Pressvorrichtung, in der der Block über einen Pressstempel unter Druck in eine anwendungsorientierte Form gebracht wird oder
- Formen des Blockes und Tieffrieren ohne Maßgabe der weiteren Verwendung unter Hinzuziehung der optischen Vermessung sobald das letztendlich gewünschte Thunfischstück feststeht und
- Erzeugen der Thunfischstücke durch Schneiden des Blockes in Stücke
charakterisiert ist.

Dieses Verfahren ist im Wesentlichen dadurch charakterisiert, dass nichtgefrorene Thunfischteile, die beispielsweise wegen ihrer Größe nicht als Einzelstück verwertbar sind, möglichst qualitätserhaltend verarbeitet werden. Zunächst werden dafür bevorzugt diejenigen Thunfischteile gesammelt, die für die erfindungsgemäße Verarbeitung geeignet sind. Dabei wird bevorzugt bereits beim Zusammenstellen der Thunfischteile darauf geachtet, dass das anwendungsorientierte Endprodukt mit möglichst hoher Qualität hieraus herstellbar ist.

Unter anwendungsorientiertem Endprodukt wird dabei verstanden, dass die Fleischstruktur, insbesondere der Faserverlauf, des Thunfisches bei der Zusammenstellung der einzelnen Blöcke sowie auch beim Verarbeiten dieses Blockes bereits berücksichtigt wird. Dies bewirkt, dass trotz der Tatsache, dass das über das Verfahren hergestellte Thunfischstück in der Regel aus mehreren Einzelteilen besteht, der optische Eindruck eines Thunfischproduktes, das vermeintlich aus einem Stück geschnitten ist, weitgehend erhalten bleiben kann.

Weiterhin kann es Ziel des Verfahrens sein, das zwar erkennbar ist, dass das Thunfischstück aus mehreren Einzelteilen besteht, aber dennoch erkennbar bleibt, dass diese Einzelteile Teile hoher Qualität sind. Aus diesem Grund soll unter dem Begriff Thunfischstück auch eine Zusammenstellung einzelner Stücke angesehen werden, die aber zusammenhängend angeboten, zum Beispiel in einer Dose verkauft werden.

Durch das Verfahren werden nun die nicht gefrorenen Thunfischteile zunächst zu den Blöcken, also Kombinationen von einzelnen Teilen oder Filets, zusammengefasst. Hierbei wird darauf geachtet, dass die Thunfischteile natürlich zum einen eine hinreichende Qualität aufweisen, zum anderen aber bei der Zusammenstellung der Blöcke möglichst so ausgerichtet sind, dass trotz der weiteren Verarbeitung das später hergestellte Thunfischstück möglichst über einen großen Bereich eine für den Endverbraucher sichtbare Querschnittsfläche aufweist, die die typische Erscheinungsweise eines quer zur Faserrichtung geschnittenen Filetstückes besitzt.

Aus den nicht gefrorenen Thunfischteilen wird nun zunächst ein Cluster zusammengestellt, der dann im einfachsten Fall auch schon der fertige Block für die Weiterverarbeitung sein kann. In diesem Zustand ist das Thunfischfleisch nicht gefroren.

Zum einen ist es möglich, die Thunfischteile zusammenzulegen und aneinander anliegend einzufrieren. Dann kann etwa ein kubischer Block aus diesem Cluster herausgeschnitten oder bei einer Endlosfertigung des Clusters von diesem abgeschnitten werden kann. So können bei einer Ausgestaltung dieses Verfahrens Thunfischteile in einer vorgegebenen Füllhöhe auf ein Laufband aufgelegt oder in Formen eingelegt werden, wobei anschließend das Tieffrieren erfolgt. Im Fall des Laufbandes kann so ein Endlosband aus gefrorenem Thunfisch erzeugt werden, das nach Passieren der Gefrierstation in die Blöcke durch Einbringen eines Schnittes, der beispielsweise rechtwinklig zur Vorschubrichtung angeordnet wird, zerlegt wird. Die so erzeugten quaderförmigen Blöcke können entweder unmittelbar weiterverwendet werden oder über eine später noch zu beschreibende Press Station in die gewünschte Endform des Blockes gebracht werden.

Sofern für den Block einzelne Formen verwendet werden, kann diese Form natürlich zumindest bezüglich der Seitenwände und der Unterseite bereits die endgültige Form des Blockes aufweisen. Weiterhin ist es möglich, die Thunfischteile bereits in geeigneter Orientierung in eine elastische Umhüllung einzugeben, in der sie dann zum Beispiel in zylindrischer Form tiefgefroren werden können. Eine solche Umhüllung kann zum Beispiel die aus der Wurstproduktion bekannte Pelle in Form eines Natur- oder Kunstdarmes sein.

Ein guter Qualitätseindruck für das später hergestellte Thunfischstück entsteht dann, wenn innerhalb des Clusters und damit auch innerhalb des später hieraus hergestellten Blocks die Thunfischstücke bereits so orientiert sind, dass das spätere Schnittbild dem Verbraucherwunsch möglichst nahe kommt. Hierzu werden häufig die Thunfischstücke so angeordnet, dass dem späteren Schnittbild, wenn der Block anschließend in Stücke zerschnitten wird, Rechnung getragen wird. So wird bei vielen Anwendungen der Verbraucher eine Sicht auf die geschnittenen Fasern Thunfischfleisches bevorzugen, da dies auch den optischen Eindruck erzeugt, dass es sich um Filetfleisch handelt. Bisher bestand das Problem, dass selbst dann, wenn Filetfleisch verarbeitet wurde, durch die Verarbeitung der optische Eindruck verloren gehen konnte.

Die Tatsache, dass das Schnittbild an den Verbraucherwunsch angepasst ist, wird im vorliegenden Zusammenhang mit "anwendungsorientiert" bezeichnet. So kann beispielsweise bei der Herstellung von Dosenware der Thunfisch zu Blöcken zusammengefasst werden, wobei die Blöcke eine Querschnittsform aufweisen, die der Querschnittsform der Dose entspricht. Ist bei diesen Produkten die Faser der einzelnen Thunfischteile so ausgerichtet, dass sie längs der Längsrichtung des Blockes und quer zur späteren Schnittrichtung beim Abschneiden der einzudosenden Stücke des Blockes angeordnet ist, wird der Verbraucher später in der Dose auf die rechtwinklig geschnittenen Fasern des Fleisches schauen können. Hieraus resultiert ein wesentlich höherer Qualitätseindruck im Vergleich zu einer nicht kontrolliert orientierten Befüllung der Dose.

Der aus den einzelnen Thunfischteilen hergestellte Cluster kann bereits die Form des Blockes aufweisen, so dass ein explizites Formen des Blockes nur dann notwendig ist, wenn dies nicht der Fall ist. Ferner könnten natürlich die Cluster auch so gebildet werden, dass sie bereits die Endform des Thunfischstückes aufweisen, wobei dies eher die Ausnahme sein wird. Stattdessen wird bei den meisten Anwendungen der Block ein insbesondere ganzzahliges Mehrfaches des Gewichtes der herzustellen Thunfischstücke besitzen, so dass aus dem Block die gewünschten Thunfischstücke erzeugt werden können.

Der Block kann beispielsweise zylindrisch oder quaderförmig sein, oder ein andere Oberfläche aufweisen, die Thunfischstücke können eine Scheibe des Blockes oder auch ein Teil einer Scheibe sein, im letztgenannten Fall würde die Scheibe des Blockes üblicherweise nochmals in einzelne Stücke zerteilt. Wesentlich ist dabei, dass je nach gewünschtem Endprodukt die Schnittlinien zur Faserrichtung des Tunfischfleisches ausgerichtet sind bzw. hieran angepasst sind. So wird meist eine zur Faser rechtwinklige Ausrichtung bevorzugt sein. Allerdings kann dies im Einzelfall auch anders sein und zum Beispiel ein Längsschnitt erfolgen, der parallel zu den Fasern verläuft.

Bei einer unregelmäßigen Oberfläche des Blockes wird er zur Optimierung der Schnittlinien einer optischen Vermessung unterzogen.

Die aus dem Block hergestellten Zwischenprodukte können, wie oben bereits beschrieben, unmittelbar verpackt werden, zum Beispiel in eine Dose eingefüllt werden. Natürlich können auf diese Weise auch aus einzelnen Thunfischteilen steakähnliche Produkte hergestellt werden, die zum Beispiel in Folie eingeschweißt werden und so in den Handel gelangen können.

Bevorzugt wird insbesondere im Rahmen der industriellen Fertigung bereits beim Zusammenfassen der Cluster von Thunfischteilen oder spätestens beim Herstellen des Blockes, dafür Sorge getragen, dass die Anforderungen hinsichtlich des Gewichtes möglichst einfach erzielt werden können. Wird zum Beispiel der Block aus den Clustern hergestellt oder sind die Cluster bereits der fertige Block, weisen diese bevorzugt ein ganzzahliges Vielfaches des Gewichtes der gewünschten Thunfischstücke auf. Dies ist natürlich nur dann notwendig, wenn die Thunfischstücke ein einheitliches Gewicht aufweisen sollen. Wird dagegen hierauf kein Wert gelegt, etwa weil es handelsrechtlich hierauf nicht ankommt oder weil die Stücke später noch zu einem zu erzielenden Gesamtgewicht sortiert werden können, kann dies unterbleiben.

Mit dem Verfahren lassen sich Thunfischstücke herstellen, die aufgrund der geeigneten Anordnung der Fasern des Thunfischfleisches innerhalb des Clusters einen hohen Qualitätseindruck aufweisen. So kann beispielsweise der Block auch die Form eines klassischen Rückenfilets aufweisen, aus dem dann über quer zur Längsrichtung des vermeintlichen Rückenfilets eingebrachte Schnitte Steaks oder Dosenware ausgeschnitten werden kann. Meist werden die Ausrichtung der Thunfischteile im Cluster bzw. Block und die Schnittlinien so gewählt bzw. angeordnet, dass der Thunfisch quer zu seiner Faserrichtung geschnitten wird. Dies muss nicht immer ein Winkel von 90° zur Faserrichtung sein, auch kleinere Winkel, etwa zwischen 45° und 90°, können ein gutes Ergebnis liefern. Schließlich kann es je nach Anwendung auch praktikabel sein, mit Längsschnitten den Cluster zu teilen, um den Thunfisch z.B. in Streifen zu schneiden.

Sollte das Thunfischfleisch tiefgefroren angeliefert werden, wird mit Hilfe der optischen Erfassung die optimale Aufteilung des Blockes in gewichtsgleiche Portionen mit definiertem Faserverlauf ermittelt. Eine zweite Variante kann sein, dass die angelieferte Ware zunächst aufgetaut und dann zu einem Block geformt wird, der in den Abmessungen auf die anwendungsorientierte Endform optimiert und anschließend tiefgefroren wird. Die zweite Variante führt allerdings zu - mit doppelten Auftauprozessen verbundenen - Qualitätsverlust.

Weitere Merkmale und Vorteile des erfindungsgemäßen Verfahrens ergeben sich aus der nachfolgenden Beschreibung eines bevorzugten Ausführungsbeispiels der Erfindung anhand der Zeichnungen.

Die Zeichnungen zeigen:
- Fig. 1: einen angeschnittenen Rückenfilets eines Thunfisches mit schematischer Darstellung der Schnittlinien,
- Fig. 2: in schematischer Ansicht den Formprozess des Shapens und
- Fig. 3: das anschließende Eindosen des geformten Stückes als Anwendungsbeispiel.

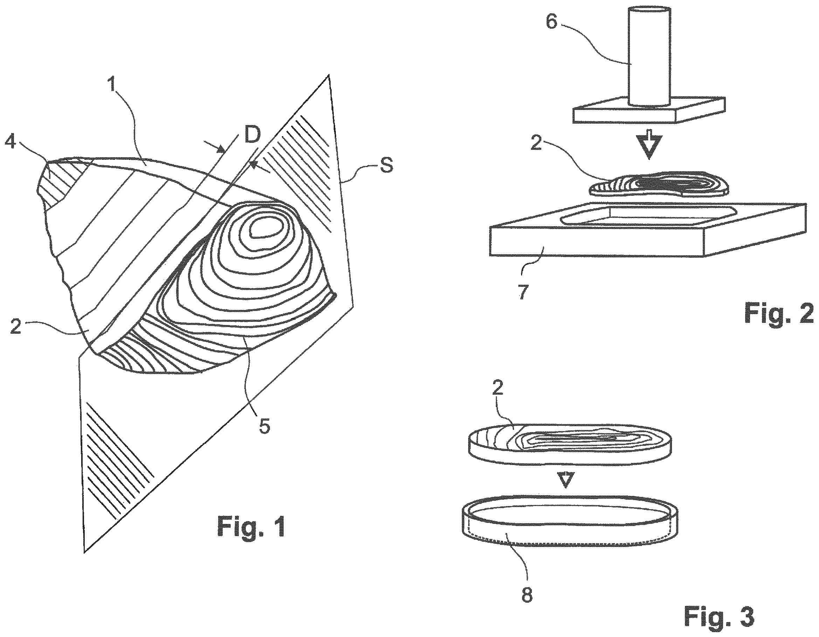

In Figur 1 ist eine Inputware 1 in Form eines Rückenfilets bzw. Filetstücks schematisch dargestellt. Wie zu erkennen ist, nimmt die Größe dieses Filetstücks von vorne nach hinten kontinuierlich ab. Über das erfindungsgemäße Verfahren sollen nun Thunfischsteaks als Stücke 2 hergestellt werden, die neben einem gleichen Gewicht auch eine einheitliche Größe aufweisen.

Ein solches Verfahren kann zum Beispiel verwendet werden, um für fertige Lebensmittel oder auch in Großküchen gleiche Stücke 2 als Outputware anbieten zu können. Dies hat zum einen den Vorteil, dass der Verbraucher in jeder Packung das gleichgeformte Stück 2 findet und so von einer einheitlichen Qualität und Größe der Thunfischeinwaage ausgeht.

Ein anderer Vorteil, der insbesondere bei der Zubereitung in Großküchen, zum Beispiel in den Restaurants des Kreuzfahrtschiffes, bedeutsam ist, besteht darin, dass gleich große und gleichgeformte Stücke 2 einheitliche zubereitet werden können. So können beispielsweise in einem Dampfgarer oder einem Ofen eine Vielzahl von nebeneinanderliegenden Stücken 2 bei gleicher Garzeit mit gleichem Ergebnis des Durchgarens zubereitet werden, ohne dass dünnere Stücke 2 übergart würden oder dickere Stücke 2 noch nicht vollständig durchgegart wären.

Wie aus Figur 1 schematisch zu erkennen ist, werden aus der Inputware 1 die Stücke 2 mit gleichem Gewicht geschnitten. Da der Thunfisch nach hinten dünner wird, erhöht sich die Dicke D der scheibenartigen Stücke 2 mit zunehmendem Schneidfortschritt. Die Dicke D ergibt sich daraus, dass über die optische Erfassung und eine anschließende Berechnung die jeweils notwendige Schneidebene S festgelegt wird, um Stücke 2 gleichen Gewichts zu erzeugen.

Der hintere Rest 4 der Inputware 1 ist zu klein bzw. die notwendigen Umformgrade wären zu groß, um hieraus noch ein steakähnliches Stück 2 zu formen. Daher wird bevorzugt dieser hintere Rest 4 einer anderen Verarbeitung zugeführt, beispielsweise der Verarbeitung der Rückenfilets mit niederen Qualitäten zugeführt, zusammen mit zerfaserter Ware eingedost, als Belag für Pizza oder auch als kleineres Stück, aber mit zusammenhängender Faserstruktur angeboten.

Die Stücke 2 werden im gezeigten Ausführungsbeispiel des Verfahrens in einer Formmulde 7 auf eine gleiche Form umgeformt. Hierzu wird über einen Pressstempel 6 das Stück 2 innerhalb der Formmulde 7 "geshapt", also auf die Grundfläche und Randkontur der Formmulde 7 gebracht.

Figur 3 zeigt eine optionale Erweiterung des Verfahrens. Hier ist die Form der Formmulde 7 aus Figur 2 der Kontur einer Verpackung, z.B. einer Dose, angepasst. Auf diese Weise passt das so erzeugte Filetstück exakt in die Verpackung hinein und kann ohne Bruch oder Zerstörung der Fasern angeboten werden.

Alternativ können natürlich die tiefgefrorene Stücke 2 nach dem Umformen auch als Steaks in einer gemeinsamen Umverpackung vertrieben werden. Wesentlich für die Erhaltung des Qualitätseindruckes ist dabei der Erhalt der Faserstruktur, der sich insbesondere aus dem zielgerichteten Zuschneiden der Stücke 2 und das nachfolgende schonende Formen ergibt. Ferner werden bevorzugt die Umformgrade im Formprozess gering gehalten.

## Patentansprüche

1. Verfahren zum Herstellen von Thunfischstücken möglichst hoher Qualität aus Inputwaren, so dass eine optimale Ausbeute der Inputwaren erfolgt, wobei die zu verarbeitenden Inputwaren optisch erfasst, auf ein Zielgewicht gebracht und anschließend in eine zur Verpackung und/oder Weiterarbeitung geeignete Form geformt werden, **gekennzeichnet, durch** die Verfahrensschritte:
• Verwenden einer Inputware in Form einer oder mehrerer tiefgefrorener Thunfischstücke für die Durchführung des Verfahrens, wobei im Falle zweier oder mehrerer Thunfischstücke diese zu einem aneinander anhaftenden, zusammenhängendem Cluster/Block zusammengefasst sind,
• Erfassen der Lage, Form und/oder Größe der Inputware über ein optisches Erfassungsmittel unter direkter oder indirekter Berücksichtigung der Faserlage des Thunfischfleischs,
• Errechnen zumindest eines Schnittmusters für die Inputware zum Schneiden eines Thunfischzuschnitts, der ein gewünschtes Zielgewicht und/oder eine gewünschte Form aufweist, wobei die Errechnung des Schnittmusters einen Optimierungsprozess beinhaltet, über den neben dem Bestimmen des nach dem Beschneiden zum Erreichen des Zielgewichtes notwendigen Volumens das Schnittmuster zur Orientierung der Fasern des Thunfischfleischs definiert und die optimale Ausbeute aus der Inputware festgelegt wird;
• Schneiden gemäß des errechneten Schnittmusters in wenigstens einem Zuschneideschritt längs zumindest einer, durch das Schnittmuster vorgegebenen Schneidlinie oder -ebene.

2. Verfahren zum Herstellen von Thunfischstücken nach Anspruch 1, **dadurch gekennzeichnet, dass** das Schnittmuster wenigstens eine Schnittlinie umfasst, die in einem Winkel zwischen 45° und 120°, insbesondere rechtwinklig, zu den Fasern des Thunfisches verläuft.

3. Verfahren zum Herstellen von Thunfischstücken nach Anspruch 1 oder Anspruch 2, **dadurch gekennzeichnet, dass** die Thunfischzuschnitte nach dem Zuschneideschritt sortiert werden, wobei
• Thunfischzuschnitte, die das Zielgewicht und die gewünschte Form aufweisen, als Verfahrensprodukt der weiteren Verarbeitung, insbesondere durch Eindosen oder Verpackung, zugeführt werden,
• Thunfischzuschnitte, die zwar das Zielgewicht, nicht aber die gewünschte Form aufweisen, einem Formgebungsprozess unterzogen werden und
• Thunfischzuschnitte, die leichter als das Zielgewichts sind, zur Verarbeitung in einem anderen Prozess aussortiert oder zu einer Kombination aus mehreren Thunfischzuschnitten so kombiniert werden, dass die Summe der Gewichte dem Zielgewicht entspricht und die so gebildete Kombination tiefgefrorener Filetteile dem Formgebungsprozess unterworfen wird.

4. Verfahren zum Herstellen von Thunfischstücken nach Anspruch 3, **dadurch gekennzeichnet, dass** der Formgebungsprozess das Eingeben der tiefgefrorenen Thunfischzuschnitte oder der Kombinationen von tiefgefrorenen Thunfischteilen in eine Form einer Presse umfasst, wo sie unter Druck in einer Form und/oder mit einem konturierten Pressstempel auf eine gewünschte Form zu der Outputware mit gewünschtem Zielgewicht und gewünschter Form umgeformt werden.

5. Verfahren zum Herstellen von Thunfischstücken nach dem vorhergehenden Anspruch, **dadurch gekennzeichnet, dass** die Thunfischzuschnitte oder die Kombination von Thunfischteilen derart in die Pressvorrichtung eingelegt werden, dass die Presskraft parallel oder quer zur Faserrichtung des Thunfisch-Fleischs aufgebracht wird.

6. Verfahren zum Herstellen von Thunfischstücken nach einem der vorhergehenden Ansprüche, **dadurch gekennzeichnet, dass** die Inputware Thunfisch-Rückenfilets, insbesondere in Premiumqualitäten sind.

7. Verfahren zum Herstellen von Thunfischstücken nach dem vorhergehenden Anspruch, **dadurch gekennzeichnet, dass** die Thunfisch-Rückenfilets vor oder nach dem Einfrieren und der optischen Erfassung beschnitten werden, insbesondere dergestalt, dass das verbleibende Gewicht ein ganzzahliges Vielfaches des Zielgewichtes ist, wobei hierzu das Volumen des Thunfisch-Rückenfilets erfasst wird und die Größe des abzuschneidenden Stückes errechnet wird.

8. Verfahren zum Herstellen von Thunfischstücken nach einem der vorhergehenden Ansprüche, **dadurch gekennzeichnet, dass** die Inputware vor dem Tieffrieren und der optischen Erfassung gegart werden.

9. Verfahren zum Herstellen von Thunfischstücken nach einem der vorhergehenden Ansprüche **dadurch gekennzeichnet, dass** im Falle von Inputware, die aus einer Kombination mehrerer Filetstücke besteht, die Inputwaren derart zusammengelegt werden, dass die Faserstrukturen der einzelnen Stücke im Wesentlichen parallel zueinander ausgerichtet sind.

10. Verfahren zum Herstellen von Thunfischstücken nach einem der vorhergehenden Ansprüche, **dadurch gekennzeichnet, dass** die Menge der in der Kombination von Inputwaren zusammengefassten Filetstücke dem Zielgewicht entspricht und an die Größe der zu formenden Outputware angepasst ist.

11. Verfahren zum Herstellen von Thunfischstücken nach einem der vorhergehenden Ansprüche, **dadurch gekennzeichnet, dass** die Inputwaren vor der optischen Erfassung in gefrorenem oder nichtgefrorenem Zustand vorgeformt werden.

12. Verfahren zum Herstellen von Thunfischstücken nach einem der vorhergehenden Ansprüche, **dadurch gekennzeichnet, dass** die, die Inputwaren bildenden Thunfischstücken auf eine Temperatur von weniger als -5°C, bevorzugt auf eine Temperatur von -7°C bis -20°C gekühlt werden.

13. Verfahren zum Herstellen von Thunfischstücken nach einem der vorhergehenden Ansprüche, **dadurch gekennzeichnet, dass** die Outputware Thunfischstücke mit einem, an das Erscheinungsbild eines aus einem Filet herausgeschnittenen Thunfischsteaks angenähertem Aussehen sind.

14. Verfahren zum Herstellen von Thunfischstücken nach einem der vorhergehenden Ansprüche, **dadurch gekennzeichnet, dass** die Inputware oder die Outputware vor, während oder nach den Verfahrensschritten nach einem der vorhergehenden Ansprüche mariniert wird.

15. Verfahren zum Herstellen von Thunfischstücken nach einem der vorgehenden Ansprüche, **dadurch gekennzeichnet, dass** bei Verwendung zweier oder mehrerer Thunfischstücke als zusammenhängender Block, der Block so hergestellt wird, dass die Portionierung durch Schneiden gemäß des Schnittmusters unter Erhalt einer hohen Qualität und weitgehendem Erhalt der Faserung erfolgen kann.

16. Verfahren zur Herstellung von Thunfischstücken, nach einem der vorhergehenden Ansprüche, **dadurch gekennzeichnet, dass**
• aus rohen oder gegarten Thunfischteilen, insbesondere Filets oder Filetstücken, zumindest ein Block dadurch hergestellt wird, dass die Thunfischteile aus einer Kombination von aneinander anliegenden und/oder haftenden Thunfischteilen als Block zusammengefasst werden,
• nachfolgend der so hergestellte Block gefroren oder nicht gefroren auf eine gewünschte Form geformt wird, wobei
• der Block auf eine anwendungsorientierte Endform geformt wird und, sofern nicht schon vor dem Formen gefroren nach dem Formen gefroren, insbesondere tiefgefroren wird, wobei
• das Formen des Blocks auf die gewünschte, anwendungsorientierte Endform durch formendes Tieffrieren in einer Form, Schneiden und/oder Umformen in einer Pressvorrichtung erfolgt, in der der Block über einen Pressstempel unter Druck in die anwendungsorientierte Form gebracht wird und
• Erzeugen von geformten Thunfischstücken als Outputware durch Schneiden des Blockes in Stücke.

17. Verfahren nach Anspruch 16, **dadurch gekennzeichnet, dass** die Thunfischteile vor oder nach dem Zusammenfassen zu der den Block bildenden Kombination von Thunfischteilen derart beschnitten werden, dass der Block ein vorgegebenes Zielgewicht aufweist.

18. Verfahren nach Anspruch 16, dass durch optische Vermessung des Blockes eine Optimierung der Schnittlinien erfolgt, die eine optimale Ausbeute an zielgewichtigen Endprodukten mit hoher Qualität ermöglicht.

19. Verfahren nach einem der beiden vorhergehenden Ansprüche, **dadurch gekennzeichnet, dass** der Block durch Einfüllen der nicht gefrorenen Kombination von Thunfischteilen in eine elastische Umhüllung, insbesondere eine Pelle aus Naturdarm oder Kunstdarm, hergestellt und/oder geformt wird.

20. Verfahren nach dem vorhergehenden Anspruch, **dadurch gekennzeichnet, dass** die Umhüllung mit der noch nicht gefrorenen Kombination von Thunfischteilen in eine Form eingelegt wird, deren Innenkontur der gewünschten Außenkontur des Blockes entspricht, wobei die Umhüllung mit den noch nicht gefrorenen Clustern von Thunfisch-Teilen in der Form zur Herstellung des geformten Blocks tiefgefroren wird.

21. Verfahren zum Herstellen von Thunfischstücken nach einem der vorhergehenden Ansprüche **dadurch gekennzeichnet, dass** die nach einem der vorhergehenden Ansprüche hergestellten Thunfischstücke als Outputware, insbesondere in Form von Thunfischsteaks, im gefrorenen Zustand mit einem geeigneten Verfahren automatisiert in eine Verpackung, beispielsweise eine Dose, eingebracht werden.

22. Verfahren nach einem der beiden vorhergehenden Ansprüche, **dadurch gekennzeichnet, dass** der Block so ausgebildet ist und einen derartigen Durchmesser aufweist, dass der Block dem Durchmesser eines durchschnittlichen Kopfbereichs eines Thunfisch-Rückenfilets in Premium-Qualität entspricht oder der Größe eines Thunfischsteaks bzw. einer handelsüblichen Dosenverpackung zwischen 50mm und 250mm entspricht.

23. Verfahren nach Anspruch 21, **dadurch gekennzeichnet, dass** die aus dem Block geschnittenen Scheiben nochmals zerteilt, insbesondere in einzelne Segmente geschnitten werden.

24. Verfahren zum Herstellen von Thunfischstücken nach einem der vorhergehenden Ansprüche **dadurch gekennzeichnet, dass** die entstandenen umgeformten Outputwaren und die Thunfischsteaks in gefrorenem Zustand mit einem geeigneten Verfahren automatisiert in die finale Verpackung - z.B. Dosen - verbracht werden.

## Claims

1. Method for producing pieces of tuna of the highest possible quality from input goods to optimise the yield from the input goods, wherein the input goods to be processed are optically detected, brought to a target weight and then formed into a shape suitable for packaging and/or further processing, **characterised by** the following method steps:
• use of individual input goods in the form of one or several pieces of deep frozen tuna for performing the method, wherein, in the case of two or more pieces of tuna, these are combined into a cluster/block attached and adhering to each other,
• acquisition of the position, shape and/or size of the input article by means of an optical acquisition means by the direct or indirect observation of the fibre position of the tuna meat,
• calculation of at least one cutting pattern for the input article for cutting a tuna cut which has a desired target weight and/or a desired shape, wherein the calculation of the cutting pattern involves an optimisation process by means of which, besides determining the volume needed after trimming to achieve the target weight, the cutting pattern to orientate the fibres of the tuna meat is defined and the optimal yield from the input article is established;
• cutting according to the calculated cutting pattern in at least one cutting step along at least one cutting line or plane predetermined by the cutting pattern.

2. Method for producing pieces of tuna according to claim 1, **characterised in that** the cutting pattern comprises at least one cutting line which runs at an angle between 45° and 120°, in particular at right angles to the fibres of the tuna.

3. Method for producing pieces of tuna according to claim 1 or claim 2, **characterised in that** the tuna cuts are sorted in accordance with the cutting step, wherein
• tuna cuts of the target weight and desired shape are supplied as a process product for further processing, in particular for canning or packaging,
• tuna cuts, although of the target weight but not the desired shape, undergo a forming process and
• tuna cuts which are lighter than the target weight, are sorted out for processing in another process or are combined into a combination of several tuna cuts such that the total of the weights corresponds to the target weight and the combination of deep frozen fillet parts thus formed undergoes the forming process.

4. Method for producing pieces of tuna according to claim 3, **characterised in that** the forming process comprises the insertion of the deep frozen tuna cuts or the combinations of deep frozen tuna parts into a mould of a press where they are reformed under pressure in a mould and/or with a contoured press punch to a desired shape to form the output article with the desired target weight and desired shape.

5. Method for producing pieces of tuna according to the preceding claim, **characterised in that** the tuna cuts or the combination of tuna parts are placed in the press device in such a way that the press force is applied parallel or transversely to the fibre direction of the tuna meat.

6. Method for producing pieces of tuna according to any one of the preceding claims, **characterised in that** the input articles are tuna loin fillets, in particular of premium quality.

7. Method for producing pieces of tuna according to the preceding claim, **characterised in that** the tuna loin fillets are trimmed before or after freezing and optical acquisition, in particular in such a way that the remaining weight is a whole multiple of the target weight, wherein the volume of the tuna loin fillet is also acquired and the size of the piece to be trimmed off is calculated.

8. Method for producing pieces of tuna according to any one of the preceding claims, **characterised in that** the input article is cooked before deep freezing and acquiring optically.

9. Method for producing pieces of tuna according to any one of the preceding claims **characterised in that**, in the case of an input article consisting of a combination of several fillet pieces, the individual input goods are combined such that the fibre structures of the individual pieces are aligned substantially parallel to each other.

10. Method for producing pieces of tuna according to any one of the preceding claims, **characterised in that** the quantity of the fillet pieces collected together in the combination of input goods corresponds to the target weight and is adapted to the size of the output article to be formed.

11. Method for producing pieces of tuna according to any one of the preceding claims, **characterised in that** the input goods are preformed before the optical acquisition in the frozen or non-frozen condition.

12. Method for producing pieces of tuna according to any one of the preceding claims, **characterised in that** the pieces of tuna forming the input goods are cooled to a temperature of less than -5°C, preferably to a temperature of -7°C to -20°C.

13. Method for producing pieces of tuna according to any one of the preceding claims, **characterised in that** the output goods are pieces of tuna with an appearance approaching the visual appearance of a tuna steak cut from a fillet.

14. Method for producing pieces of tuna according to any one of the preceding claims, **characterised in that** the input goods or the output goods are marinated before, during or after the method steps according to any one of the preceding claims.

15. Method for producing pieces of tuna according to any one of the preceding claims, **characterised in that** in using two or more pieces of tuna as a combined block, the block is produced such that the division into portions can be done by cutting according to the cutting pattern while maintaining high quality and substantially retaining the fibre pattern.

16. Method for producing pieces of tuna according to any one of the preceding claims, **characterised in that**
• at least one block is produced from raw or cooked tuna parts, in particular fillets or fillet pieces such that the tuna parts are combined as a block from a combination of tuna parts in contact with and/or adhering to each other,
• next, the frozen or non-frozen block thus formed is formed into a desired shape, wherein
• the block is formed into a shape suitable for its final application and, insofar as it was not already frozen before the forming, is frozen, in particular deep frozen, after the forming, wherein
• the forming of the block to the desired shape suitable for its final application is performed by forming and deep freezing in a mould, cutting and/or reforming in a press device, in which the block is made into the shape suitable for its final application by means of a press punch under pressure and
• the production of shaped pieces of tuna as an output article by cutting the block into pieces.

17. Method according to claim 16, **characterised in that** the tuna parts are trimmed before or after collecting together into the combination of tuna parts forming the block such that the block has a predetermined target weight.

18. Method according to claim 16 wherein the cutting lines are optimised by optical measurement of the block enabling the yield of end products of target weight and of high quality to be optimised.

19. Method according to either one of the two preceding claims, **characterised in that** the block is produced and/or formed by filling the non-frozen combination of tuna parts into a flexible envelope, in particular a skin of natural gut or artificial gut.

20. Method according to the preceding claim, **characterised in that** the envelope with the still non-frozen combination of tuna parts is placed in a mould whose internal contour corresponds to the desired contour of the block, wherein the envelope is deep frozen with the still non-frozen clusters of tuna parts in the mould to produce the formed block.

21. Method for producing pieces of tuna according to any one of the preceding claims, **characterised in that** the pieces of tuna produced according to any one of the preceding claims as output goods, in particular in the form of tuna steaks, in the frozen condition are packaged automatically, in particular, canned, using a suitable method.

22. Method according to either one of the two preceding claims, **characterised in that** the block is formed and has a diameter such that the block corresponds to the diameter of an average head section of a tuna loin fillet of premium quality or corresponds to the size of a tuna steak or, as the case may be, to a conventional canned package between 50mm and 250mm.

23. Method according to claim 21, **characterised in that** the slices cut from the block are again divided, in particular, are cut into individual segments.

24. Method for producing pieces of tuna according to any one of the preceding claims, **characterised in that** the resulting reformed output goods and the tuna steaks in the frozen condition are finally packaged automatically, such as canned, using a suitable method.

## Revendications

1. Procédé de production de morceaux de thon de la qualité la plus élevée possible à partir de matières premières pour optimiser la production à partir des matières premières, lesdites matières premières à transformer étant détectées optiquement, amenées à un poids cible et ensuite façonnées en une forme adaptée au conditionnement et/ou à une transformation supplémentaire, **caractérisé par** les étapes de procédé suivantes :
• l'utilisation de matières premières individuelles sous la forme d'un ou plusieurs morceaux de thon surgelés pour exécuter le procédé, dans le cas de deux morceaux de thon ou plus, ceux-ci étant combinés en un ensemble/bloc lié et collant les uns aux autres,
• l'acquisition de la position, forme et/ou taille de l'article entrant à l'aide d'un moyen d'acquisition optique par observation directe ou indirecte de la position des fibres de la chair de thon,
• le calcul d'au moins un motif de découpe pour l'article entrant afin de découper un morceau de thon qui présente un poids cible souhaité et/ou une forme souhaitée, ledit calcul du motif de découpe impliquant un processus d'optimisation à l'aide duquel, en plus de la détermination du volume nécessaire après parage pour obtenir le poids cible, le motif de découpe pour orienter les fibres de la chair de thon est défini et le rendement optimal de l'article entrant est établi ;
• la découpe selon le motif de découpe calculé dans au moins une étape de découpe le long d'au moins une ligne ou un plan de découpe prédéterminé par le motif de découpe.

2. Procédé de production de morceaux de thon selon la revendication 1, **caractérisé en ce que** le motif de découpe comprend une ligne de découpe qui forme un angle compris entre 45° et 120°, en particulier des angles droits avec les fibres du thon.

3. Procédé de production de morceaux de thon selon la revendication 1 ou la revendication 2, **caractérisé en ce que** les morceaux de thon sont triés selon l'étape de découpe,
• les morceaux de thon du poids et de la forme souhaitée cibles étant fournis sous forme de produit de procédé en vue d'une transformation supplémentaire, en particulier la mise en conserve ou le conditionnement,
• les morceaux de thon, alors qu'ils sont au poids cible mais ne sont pas de la forme souhaitée, subissant un processus de mise en forme et
• les morceaux de thon qui sont plus légers que le poids cible, sont séparés par tri en vue d'une transformation dans un autre processus ou sont combinés dans une association de plusieurs morceaux de thon de sorte que le total des poids corresponde au poids cible et que l'association de morceaux de filets surgelés ainsi formés subisse le processus de mise en forme.

4. Procédé de production de morceaux de thon selon la revendication 3, **caractérisé en ce que** le processus de mise en forme comprend l'introduction des morceaux de thon surgelés ou des associations de morceaux de thon surgelés dans le moule d'une presse où ils sont remis en forme sous pression dans un moule et/ou avec un poinçon de presse profilé à une forme souhaitée pour former l'article sortant avec le poids cible souhaité et la forme souhaitée.

5. Procédé de production de morceaux de thon selon l'une quelconque des revendications précédentes, **caractérisé en ce que** les morceaux de thon ou l'association de morceaux de thon sont disposés dans le dispositif de presse de sorte que la force de compression soit appliquée parallèlement ou transversalement à la direction des fibres de la chair de thon.

6. Procédé de production de morceaux de thon selon l'une quelconque des revendications précédentes, **caractérisé en ce que** les articles entrants sont des filets de longes de thon, en particulier de qualité supérieure.

7. Procédé de production de morceaux de thon selon l'une quelconque des revendications précédentes, **caractérisé en ce que** les filets de longes de thon sont parés avant ou après congélation et l'acquisition optique, en particulier de sorte que le poids restant soit un multiple entier du poids cible, ledit volume de filet de longe de thon soit également acquis et la taille du morceau à parer soit calculée.

8. Procédé de production de morceaux de thon selon l'une quelconque des revendications précédentes, **caractérisé en ce que** l'article entrant est cuit avant surgélation et acquisition optique.

9. Procédé de production de morceaux de thon selon l'une quelconque des revendications précédentes, **caractérisé en ce que**, dans le cas d'un article entrant se composant d'une association de plusieurs morceaux de filet, les matières premières individuelles sont combinées de sorte que les structures de fibres des morceaux individuels soient alignées de manière pratiquement parallèle les unes par rapport aux autres.

10. Procédé de production de morceaux de thon selon l'une quelconque des revendications précédentes, **caractérisé en ce que** la quantité de morceaux de filet recueillis ensemble dans l'association de matières premières corresponde au poids cible et soit adaptée à la taille de l'article sortant à former.

11. Procédé de production de morceaux de thon selon l'une quelconque des revendications précédentes, **caractérisé en ce que** les matières premières sont préalablement mises en forme avant l'acquisition optique à l'état congelé ou non congelé.

12. Procédé de production de morceaux de thon selon l'une quelconque des revendications précédentes, **caractérisé en ce que** les morceaux de thon formant les matières premières sont refroidis jusqu'à une température inférieure à -5°C, de préférence à une température de -7°C à -20°C.

13. Procédé de production de morceaux de thon selon l'une quelconque des revendications précédentes, **caractérisé en ce que** les produits finis sont des morceaux de thon présentant un aspect s'approchant de l'aspect visuel d'un steak de thon découpé à partir d'un filet.

14. Procédé de production de morceaux de thon selon l'une quelconque des revendications précédentes, **caractérisé en ce que** les matières premières ou les produits finis sont marinés avant, pendant ou après les étapes de procédé selon l'une quelconque des revendications précédentes.

15. Procédé de production de morceaux de thon selon l'une quelconque des revendications précédentes, **caractérisé en ce que** lors de l'utilisation de deux morceaux de thon ou plus sous forme de block associé, le block est produit de sorte que le partage en portions puisse être effectué par découpe suivant le motif de découpe tout en maintenant une qualité élevée et en conservant pratiquement le motif de fibres.

16. Procédé de production de morceaux de thon selon l'une quelconque des revendications précédentes, **caractérisé en ce que**
• au moins un bloc est produit à partir de morceaux de thon bruts ou cuits, en particulier des filets ou des morceaux de filet de sorte que les morceaux de thon sont combinés sous forme de bloc à partir d'une association de morceaux de thon en contact les uns avec les autres et/ou collant les uns aux autres,
• ensuite, le bloc congelé ou non congelé ainsi formé est formé en une forme souhaitée,
• le bloc étant formé en une forme adaptée à son application finale et, dans la mesure où il n'a pas déjà été surgelé avant la mise en forme, étant congelé, en particulier surgelé, après mise en forme,
• la mise en forme du bloc à la forme souhaitée adaptée à son application finale étant effectuée par mise en forme et surgélation dans un moule, découpe et/ou remise en forme dans un dispositif de presse, dans lequel le bloc est mis dans la forme adaptée à son application finale à l'aide d'un poinçon de presse sous pression et
• la production de morceaux de thon mis en forme sous forme d'article sortant par découpe du bloc en morceaux.

17. Procédé selon la revendication 16, **caractérisé en ce que** les morceaux de thons sont parés avant ou après avoir été recueillis ensemble dans l'association de morceaux de thon formant le bloc de sorte que le bloc présente un poids cible prédéfini.

18. Procédé selon la revendication 16, lesdites lignes de découpe étant optimisées par mesure optique du bloc, ce qui permet l'optimisation du rendement des produits finis de poids cible et de qualité supérieure.

19. Procédé selon l'une quelconque des deux revendications précédentes, **caractérisé en ce que** le bloc est produit et/ou mis en forme par remplissage de l'association non congelée de morceaux de thon dans une enveloppe souple, en particulier une peau de boyau naturel ou de boyau artificiel.

20. Procédé selon la revendication précédente, **caractérisé en ce que** l'enveloppe avec l'association encore non congelée de morceaux de thon est disposée dans un moule dont le contour intérieur correspond au contour souhaité du bloc, ladite enveloppe étant surgelée avec les ensembles encore non congelés de morceaux de thon dans le moule pour produire le bloc mis en forme.

21. Procédé de production de morceaux de thon selon l'une quelconque des revendications précédentes, **caractérisé en ce que** les morceaux de thon produits selon l'une quelconque des revendications précédentes sous forme de produits finis, en particulier sous la forme de steaks de thon, à l'état congelé sont conditionnés automatiquement, en particulier mis en conserve, à l'aide d'un procédé adapté.

22. Procédé selon l'une quelconque des deux revendications précédentes, **caractérisé en ce que** le bloc est mis en forme et possède un diamètre tel que le bloc correspond au diamètre d'une section de tête moyenne d'un filet de longe de thon de qualité supérieure et correspond à la taille d'un steak de thon ou, selon le cas, d'une boîte de conserve traditionnelle comprise entre 50 mm et 250 mm.

23. Procédé de production selon la revendication 21, **caractérisé en ce que** les tranches découpées à partir du bloc sont de nouveau scindées, en particulier, sont découpées en segments individuels.

24. Procédé de production de morceaux de thon selon l'une quelconque des revendications précédentes, **caractérisé en ce que** les produits finis remis en forme résultant et les steaks de thon à l'état congelé sont finalement conditionnés automatiquement, tels que mis en conserve, à l'aide d'un procédé approprié.
